# EUROPÄISCHE PATENTSCHRIFT

(11) **EP 1 531 929 B1**
(45) Veröffentlichungstag und Bekanntmachung des Hinweises auf die Patenterteilung: **13.06.2007**
(21) Anmeldenummer: 03790858.9
(22) Anmeldetag: 05.08.2003
(51) Int. Cl.: B01J 20/20, B01J 20/28, A41D 31/00, A62D 5/00

(54) **ADSORPTIONSMATERIAL UND SEINE VERWENDUNG**
ADSORBING MATERIAL AND USE THEREOF
MATERIAU ADSORBANT ET SON UTILISATION

(30) Priorität: 29.08.2002 DE 10240548
(43) Veröffentlichungstag der Anmeldung: 25.05.2005
(73) Patentinhaber: Blücher GmbH, 40699 Erkrath (DE)
(72) Erfinder: DE RUITER, Ernest, 51381 Leverkusen (DE)
(74) Vertreter: Gesthuysen, von Rohr & Eggert
(86) Internationale Anmeldenummer: PCT/EP2003/008649
(87) Internationale Veröffentlichungsnummer: WO 2004/020089

(56) Entgegenhaltungen:
- EP-A- 0 525 409
- DE-A- 4 003 765
- DE-A- 19 829 975
- GB-A- 2 319 971
- US-A- 5 391 426
- US-A- 5 743 775
- US-B1- 6 395 383

## Beschreibung

Die vorliegende Erfindung betrifft ein Adsorptionsmaterial nach Anspruch 1, insbesondere für die Herstellung von Schutzmaterialien, wie Schutzanzügen, Schutzhandschuhen, Schutzabdeckungen (z. B. für Krankentransporte) und dergleichen, insbesondere für den ABC-Einsatz, sowie Verfahren zu seiner Herstellung und seine Verwendung in den zuvor genannten Schutzmaterialien.

Es gibt eine Reihe von Stoffen, die von der Haut aufgenommen werden und zu schweren körperlichen Schäden führen. Als Beispiele seien das blasenziehende Lost (Gelbkreuz) und das Nervengift Sarin erwähnt. Menschen, die mit solchen Giften in Kontakt kommen können, müssen einen geeigneten Schutzanzug tragen bzw. durch geeignete Schutzmaterialien gegen diese Gifte geschützt werden.

Grundsätzlich gibt es drei Typen von Schutzanzügen: Die luft- und wasserdampfundurchlässigen Schutzanzüge, die mit einer für chemische Gifte undurchlässigen Gummischicht ausgestattet sind und sehr schnell zu einem Hitzestau führen, die luft- und wasserdampfdurchlässigen Schutzanzüge, die den höchsten Tragkomfort bieten, und schließlich Schutzanzüge, die mit einer Membran ausgestattet sind, die zwar Wasserdampf, nicht aber die erwähnten Gifte hindurchlassen.

Schutzanzüge gegen chemische Kampfstoffe, die für einen längeren Einsatz unter den verschiedensten Bedingungen gedacht sind, dürfen beim Träger zu keinem Hitzestau führen. Daher verwendet man hauptsächlich luftdurchlässige Materialien.

Die luftdurchlässigen, permeablen Schutzanzüge besitzen im allgemeinen eine Adsorptionsschicht mit Aktivkohle, welche die chemischen Gifte sehr dauerhaft bindet, so daß auch von stark kontaminierten Anzügen für den Träger keinerlei Gefahr ausgeht. Der große Vorteil dieses Systems ist, daß die Aktivkohle auch an der Innenseite zugänglich ist, so daß an Beschädigungen oder sonstigen undichten Stellen eingedrungene Gifte sehr schnell adsorbiert werden. Unter extremen Bedingungen, beispielsweise wenn ein Tropfen eines eingedickten Giftes aus größerer Höhe auf eine etwas offene Stelle des Aussenmaterials auftritt und bis zur Kohle durchschlägt, kann die Kohleschicht aber örtlich kurzzeitig überfordert sein.

Die Adsorptionsschicht in den zuvor beschriebenen, luftdurchlässigen, permeablen Schutzanzügen ist in den meisten Fällen derart ausgestaltet, daß entweder im Durchschnitt bis zu circa 1,0 mm große Aktivkohleteilchen an auf einem Träger aufgedruckte Klebehäufchen gebunden sind oder aber daß ein retikulierter PU-Schaum, der mit einer "Kohlepaste" (d. h. Bindemittel und Aktivkohle) imprägniert ist, als Adsorptionsschicht zur Anwendung kommt, wobei die Adsorptionsschicht im allgemeinen durch einen "Außenstoff" (d. h. ein Abdeckmaterial) ergänzt wird und an der dem Träger zugewandten Innenseite durch ein leichtes textiles Material abgedeckt ist. Gelegentlich findet man aber auch Verbundstoffe, die ein Aktivkohleflächengebilde, so z. B. ein Aktivkohlevlies, beinhalten.

Des weiteren kommen Schutzanzüge zum Einsatz, welche mit einer Membran ausgestattet sind, die zur Erhöhung des Tragekomforts zwar wasserdampfdurchlässig ausgebildet ist, aber gleichzeitig als Sperrschicht gegen Flüssigkeiten, insbesondere Giftstoffe, wirkt. Ein solches Material ist beispielsweise in der EP 0 827 451 A2 beschrieben. Schutzanzüge mit einer für Wasserdampf durchlässigen, aber für Gifte, insbesondere Hautgifte, undurchlässigen Membran haben den Nachteil, daß an undichten Stellen eingedrungene Gifte im Inneren des Schutzanzuges verbleiben und durch die Haut des Trägers aufgenommen werden.

Die aus dem Hause der Anmelderin selbst stammende deutsche Offenlegungsschrift DE 198 29 975 A1 beschreibt Adsorptionsmaterialien für Schutzanzüge mit einer wasserdampfdurchlässigen, gleichzeitig als Sperrschicht gegenüber Flüssigkeiten wirkenden Membran auf Basis eines Polyurethans und einer Adsorptionsschicht auf Aktivkohlebasis. Die mit den dort beschriebenen Materialien erreichte Wasserdampfdurchlässigkeit ist jedoch nicht immer zufriedenstellend, insbesondere nicht unter extremen Einsatzbedingungen.

Die US 5 024 594 A betrifft ein Schutzmaterial, welches ein Laminat aus einer textilen Trägerschicht umfaßt, auf welcher eine Sorptionsschicht, die eine Mischung aus einem Sorptionsmaterial in einem polymeren Bindemittel umfaßt, und eine dünnschichtige Kompositmembranschicht aufgebracht sind, wobei letztere eine mikroporöse Substratmembran aufweist, welche wiederum mit einer ultradünnen permselektiven Membran beschichtet ist. Zur Fixierung des Sorptionsmaterials an die textile Trägerschicht ist ein polymeres Bindemittel erforderlich ist, in welches das Sorptionsmaterial eingebettet wird. Die ultradünne permselektive Membran verfügt über gewisse Barriereeigenschaften, wohingegen die mikroporöse Substratmembran zu ihrer mechanischen Stabilisierung dient.

Die ebenfalls auf die Anmelderin zurückgehende Entgegenhaltung GB 2 319 971 A beschreibt ein Adsorptionsmaterial mit einer gleichfalls einschichtig ausgebildeten Barriereschicht, welche gleichzeitig als Haftschicht für die Adsorptionsschicht dient. Angaben zur Wasserdampfdurchlässigkeit werden nicht gegeben.

Die gleichermaßen auf die Anmelderin zurückgehende Entgegenhaltung DE 40 03 765 A1 beschreibt ein wasserdampfdurchlässiges, wasserdichtes Material mit adsorbierenden Eigenschaften, welches aus einem Trägermaterial und einer damit verbundenen, elastischen, wasserdichten, jedoch wasserdampfdurchlässigen, keine Poren aufweisenden, einschichtig ausgebildeten Membran, an der Adsorberteilchen zum Haften gebracht sind, die ihrerseits durch ein leichtes Textilmaterial abgedeckt sein können, besteht. Auch hier finden sich keine Angaben im Hinblick auf die Wasserdampfdurchlässigkeit, den Wasserdampfdurchgangswiderstand und die Barrierewirkung gegenüber chemischen Kampfstoffen.

Die US 6 395 383 B1 beschreibt ein selektiv permeables Schutzmaterial, welches eine ein Polyaminpolymer enthaltende, selektiv permeable Schicht umfaßt, wobei mindestens 10 % der Polyaminpolymeramine Amin/Säure-Einheiten sind, wobei die sauren Spezies dieser Amin/Säure-Einheiten einen pKₐ-Wert von weniger als 6,4 aufweisen. Hier kommen sehr spezielle, einschichtig ausgebildete Sperrschichtmaterialien auf Basis spezieller Aminpolymere zum Einsatz, welche eine gewisse Säurestärke aufweisen. Das Schutzmaterial umfaßt keine zusätzliche Adsorptionsschicht; vielmehr wird die Verwendung adsorptiver Materialien ausdrücklich als nachteilig beschrieben (vgl. Spalte 2, Zeilen 1 ff.). Für das dort beschriebene Schutzmaterial werden Wasserdampfdurchlässigkeiten von 2.000 g/m² pro 24 h und mehr genannt. Die Sperrschicht selbst ist nicht als klebrige Schicht ausgebildet, so daß eine Verklebung mit zusätzlich einzusetzenden Klebstoffen vorgesehen ist, um weitere Schichten hieran zu fixieren.

Es ist nunmehr die Aufgabe der vorliegenden Erfindung, ein Adsorptions- bzw. Schutzmaterial bereitzustellen, welches die zuvor geschilderten Nachteile vermeidet und sich insbesondere für die Herstellung von ABC-Schutzmate-rialien, wie Schutzanzügen, Schutzhandschuhen, Schutzabdeckungen und dergleichen, eignet.

Eine weitere Aufgabe der vorliegenden Erfindung besteht darin, ein Adsorptionsmaterial, insbesondere zur Verwendung in Schutzmaterialien wie Schutzanzügen, Schutzhandschuhen, Schutzabdeckungen und dergleichen, zu schaffen, welches - neben einer wasserdampfdurchlässigen, den Durchgang insbesondere von chemischen Kampf- und Giftstoffen (z. B. Hautgiften) zumindest stark verzögernden bzw. verhindernden Membran - eine Adsorptionsschicht auf Aktivkohlebasis enthält. Dabei ist auch eine gewisse Gewichtseinsparung des Adsorptionsmaterials angestrebt.

Eine weitere Aufgabe der vorliegenden Erfindung besteht in der Bereitstellung eines Adsorptionsmaterials, insbesondere zur Verwendung in Schutzmaterialien, wie Schutzanzügen, Schutzhandschuhen, Schutzabdeckungen und dergleichen, welches einen hohen Tragekomfort gewährleistet.

Schließlich besteht eine weitere Aufgabe der vorliegenden Erfindung darin, das Adsorptionsmaterial, welches Gegenstand der aus dem Hause der Anmelderin selbst stammenden deutschen Offenlegungsschrift DE 198 29 975 A1 ist, weiterzuentwickeln.

Zur Lösung der zuvor geschilderten Aufgabenstellung schlägt die vorliegenden Erfindung ein Adsorptionsmaterial gemäß Anspruch 1 vor. Weitere, vorteilhafte Ausgestaltungen des erfindungsgemäßen Adsorptionsmaterials sind Gegenstand der jeweiligen Unteransprüche.

Weiterer Gegenstand der vorliegenden Erfindung ist ein Verfahren zur Herstellung des erfindungsgemäßen Adsorptionsmaterials, wie es in Anspruch 33 beschrieben ist.

Weiterer Gegenstand der vorliegenden Erfindung ist die Verwendung des erfindungsgemäßen Adsorptionsmaterials zur Herstellung von Schutzmaterialien, insbesondere von Schutzanzügen, Schutzhandschuhen, Schutzabdeckungen (z. B. für Krankentransporte) und dergleichen, vorzugsweise für den ABC-Einsatz, wie sie in den Ansprüchen 34 und 35 beschrieben ist.

Schließlich sind ein weiterer Gegenstand der vorliegenden Erfindung Schutzmaterialien, wie Schutzanzüge, Schutzhandschuhe, Schutzabdeckungen (z. B. für Krankentransporte), Schutzanzüge und dergleichen, insbesondere für den ABC-Einsatz, die mit dem erfindungsgemäßen Adsorptionsmaterial hergestellt sind und in den Ansprüchen 36 und 37 beschrieben sind.

Das erfindungsgemäße Adsorptionsmaterial weist eine Sperrschicht mit einer extrem hohen Wasserdampfdurchlässigkeit von im allgemeinen mindestens 201 1/m² pro 24 h bei einer Dicke von 50 µm auf (gemessen nach der "Methode des umgekehrten Bechers" bzw. "inverted cup method" nach ASTM E 96 und bei 25 °C) (Zu weiteren Einzelheiten zur Messung der Wasserdampfdurchlässigkeit [water vapour transmission, WVT] vgl. auch McCasllough et al. "A comparison of standard methods for measuring water vapour permeability of fabrics" in Meas. Sci. Technol. *[*Measurements Science and Technology] 14 1402-1408, August 2003*).* Hierdurch wird bei der Verwendung des erfindungsgemäßen Adsorptionsmaterials in Schutzmaterialien, wie z. B in Schutzanzügen, Schutzhandschuhen, Schutzabdeckungen und dergleichen, ein besonders hoher Tragekomfort gewährleistet.

Da als Adsorptionsmaterial für die Ausbildung der Adsorptionsschicht aktivkohlehaltige Materialien verwendet werden, kann der bereits ohnehin bestehende hohe Tragekomfort noch weiter gesteigert werden, weil die Aktivkohle als intermediärer Feuchtigkeits- bzw. Wasserspeicher dient und Feuchtigkeit bzw. Wasser sozusagen "abpuffern" kann.

Aufgrund der Tatsache, daß die Sperrschicht mit Barrierewirkung gegenüber chemischen Giften, insbesondere Kampfstoffen, welche den Durchtritt chemischer Gifte verhindert oder zumindest verzögert, gleichzeitig die Haftschicht für die Adsorptionsschicht darstellt, wird einerseits eine nicht unerhebliche Einsparung des Flächengewichts erreicht, weil eine zusätzliche Haftschicht nicht erforderlich ist, und andererseits aus demselben Grunde der Herstellungsprozeß vereinfacht und somit ökonomischer gestaltet, weil kein zusätzliches Auftragen einer separaten Haftschicht erforderlich ist.

Das Trägermaterial, die Adsorptionsschicht und das gegebenenfalls vorhandene Abdeckmaterial setzen die Wasserdampfdurchlässigkeit des Adsorptionsmaterials zwar insgesamt - im Vergleich zur reinen Sperrschicht - etwas herab; die Wasserdampfdurchlässigkeit des Adsorptionsmaterials insgesamt ist dennoch sehr hoch und beträgt mindestens 10 l/m² pro 24 h, insbesondere mindestens 15 l/m² pro 24 h, vorzugsweise mindestens 20 l/m² pro 24 h, bei einer Dicke der Sperrschicht von 50 µm (bei 25 °C).

Die Sperrschicht des erfindungsgemäßen Adsorptionsmaterials weist andererseits einen extrem geringen Wasserdampfdurchgangswiderstand Rₑₜ auf, wobei der Wasserdampfdurchgangswiderstand Rₑₜ der Sperrschicht unter stationären Bedingungen - gemessen nach DIN EN 31 092:1993 vom Februar 1994 ("Textilien - Physiologische Wirkungen, Messung des Wärme- und Wasserdampfdurchgangswiderstandes unter stationären Bedingungen (sweating guarded-hotplate test)") bzw. nach gleichlautender internationaler Norm ISO 11092 - bei 35°C im allgemeinen höchstens 25 (m². Pascal)/Watt, insbesondere höchstens 20 (m²· Pascal)/Watt, vorzugsweise höchstens 13 (m²·Pascal)/ Watt, bei einer Dicke der Sperrschicht von 50 µm beträgt. Das Trägermaterial, die Adsorptionsschicht und das gegebenenfalls vorhandene Abdeckmaterial setzen den Wasserdampfdurchgangswiderstand Rₑₜ des Adsorptionsmaterials zwar insgesamt - im Vergleich zur reinen Sperrschicht - etwas herauf; der Wasserdampfdurchgangswiderstand Rₑₜ des Adsorptionsmaterials insgesamt unter stationären Bedingungen ist dennoch sehr gering und beträgt im allgemeinen höchstens 30 (m²· Pascal)/Watt, insbesondere höchstens 25 (m²· Pas-cal)/Watt, vorzugsweise höchstens 20 (m²· Pascal)/Watt, bei einer Dicke der Sperrschicht (3) von 50 µm.

Die guten Trageeigenschaften des erfindungsgemäßen Adsorptionsmaterials werden durch die Verwendung einer Adsorptionsschicht auf Aktivkohlebasis durch die Pufferwirkung der Aktivkohle noch zusätzlich verbessert, weil die Aktivkohle als Feuchtigkeits- bzw. Wasserspeicher oder -puffer dient. Bei Verwendung beispielsweise von Aktivkohlekügelchen als Adsorbensmaterial für die Adsorptionsschicht sind Auflagen von bis zu circa 250 g/m² oder mehr üblich, so daß z. B. bei einem Schweißausbruch etwa 40 g/m² Feuchtigkeit gespeichert werden können, die dann durch die Sperrschicht hindurch wieder nach außen abgegeben werden können. Ein auf Basis eines solchen Materials hergestellter Schutzanzug kann also theoretisch etwa 150 g Feuchtigkeit speichern.

Die Wasserdampfdurchlässigkeit einer kompakten, also nichtporösen bzw. kontinuierlichen (geschlossenen) Sperrschicht beruht immer auch auf dem Vorhandensein hydrophiler Segmente. Um einen guten Feuchtetransport bei nur mäßiger Quellung zu erzielen, sollten die hydrophilen Bereiche zwar zahlreich sein, aber nur ein mittleres wasserbindendes Vermögen aufweisen.

Bei der erfindungsgemäß vorgesehen Sperrschicht handelt es sich also um eine hochwasserdampfdurchlässige Schicht, deren Durchlässigkeit für Gifte bzw. Kampfstoffe aber gering ist. Von der Sperrschicht aufgenommene Feuchtigkeit erhöht die Sperrwirkung. Die Quellbarkeit in Wasser sollte aber höchstens 35 % betragen.

Weiterhin weist das erfindungsgemäße Adsorptionsmaterial eine gute Sperr- bzw. Barrierewirkung gegenüber chemischen Kampfstoffen, wie beispielsweise Bis[2-chlorethyl]sulfid (auch als "Senfgas", "Lost" oder "Gelbkreuz" bezeichnet), auf. Im allgemeinen beträgt die Sperr- bzw. Barrierewirkung des erfindungsgemäßen Adsorptionsmaterials gegenüber chemischen Kampfstoffen, insbesondere Bis[2-chlorethyl]sulfid, gemessen nach CRDEC-SP-84010, Methode 2.2, bei 30 °C höchstens 4 µg / cm² pro 24 h, insbesondere höchstens 3,5 µg / cm² pro 24 h, vorzugsweise höchstens 3,0 µg / cm² pro 24 h, besonders bevorzugt höchstens 2,5 µg / cm² pro 24 h, bei einer Dicke der Sperrschicht von 50 µm.

Gemäß der Erfindung ist die Sperrschicht des erfindungsgemäßen Adsorptionsmaterials als ein mehrschichtiges Laminat bzw. als ein mehrschichtiger Verbund ausgebildet, wobei das Laminat bzw. der Verbund aus drei miteinander verbundenen Schichten oder Lagen besteht, wie in den Ansprüchen definiert. Dies ermöglicht es, Sperrschichtmaterialien mit jeweils unterschiedlichen Eigenschaften, insbesondere unterschiedlichen Wasserdampfdurchlässigkeiten und Barrierewirkungen gegenüber Kampfstoffen, miteinander zu kombinieren und so eine Optimierung der Sperrschichteigenschaften zu erreichen. Erfindungsgemäß ist bei einer Sperrschicht aus drei miteinander verbundenen Schichten bzw. Lagen die Kernschicht auf Basis eines Polymers auf Cellulosegrundlage ausgebildet und sind die zwei mit der Kernschicht verbundenen, jeweils äußeren Schichten auf Basis eines Polymers auf Polyurethangrundlage ausgebildet. Erfindungsgemäß umfaßt das Laminat bzw. der Verbund also eine Kernschicht auf Basis eines Polymers auf Cellulosegrundlage und zwei mit der Kernschicht verbundene äußere Schichten auf Basis eines Polyurethans. Dabei ist die Sperrschicht des erfindungsgemäßen Adsorptionsmaterials als ein mehrschichtiges Laminat bzw. als ein mehrschichtiger Verbund ausgebildet, wobei die Kernschicht als 1 bis 100 µm, insbesondere 5 bis 50 µm, vorzugsweise 10 bis 20 µm dicke Membran ausgebildet ist und die zwei mit der Kernschicht verbundenen äußeren Schichten als 1 bis 100 µm, insbesondere 5 bis 50 µm, vorzugsweise 5 bis 10 µm dicke Membran ausgebildet sind.

Wie zuvor beschrieben, umfaßt gemäß der vorliegenden Erfindung das erfindungsgemäße Adsorptionsmaterial eine Sperrschicht auf Basis eines Polymers auf Cellulosegrundlage. Wie ebenfalls zuvor beschieben, ist die Sperrschicht dabei als ein mehrschichtiges Laminat bzw. als ein mehrschichtiger Verbund aus drei miteinander verbundenen Schichten bzw. Lagen ausgebildet, wobei die Kernschicht auf Basis eines Polymers auf Cellulosegrundlage und die zwei mit der Kernschicht verbundenen äußeren Schichten auf Basis eines Polyurethans ausgebildet sind; die auf dem Trägermaterial aufgebrachte, erste äußere polyurethanbasierte Schicht des Laminats bzw. Verbunds dient dabei gleichzeitig als Haftschicht sowohl für die Kernschicht als auch für das Trägermaterial, und die auf die Kernschicht aufgebrachte, dem Trägermaterial abgewandte, zweite äußere polyurethanbasierte Schicht des Laminats bzw. Verbunds dient gleichzeitig als Haftschicht für die auf der dem Trägermaterial abgewandten Seite der Sperrschicht aufgebrachte Adsorptionsschicht. Die Verwendung von Polymeren auf Cellulosebasis für die Ausbildung der Sperrschicht als Kernschichtmaterial und im Verbund mit zwei polyurethanbasierten Außenschichten hat eine Reihe von Vorteilen: Zum einen sind Cellulose und Cellulosederivate ausgezeichnete Sperrschichtmaterialien insbesondere gegenüber chemischen Schad- bzw. Giftstoffen, wie z. B. Kampfstoffen (Lost etc.), und werden von diesen Materialien nicht angegriffen bzw. aufgelöst, und zum anderen verhindern die polyurethanbasierten Außenschichten eine Migration bzw. Diffusion der in der Kernschicht gegebenenfalls vorhandenen Weichmacher und dämpfen außerdem das durch die cellulosebasierte Kernschicht bedingte, beim Tragen als Schutzmaterial auftretende Knistern.

Die Sperrschicht dient gleichzeitig als Haftschicht für die auf der dem Trägermaterial abgewendten Seite der Sperrschicht angeordnete Adsorptionsschicht. Vorteilhafterweise ist die Adsorptionsschicht zu mindestens 50% insbesondere zu mindestens 60%, vorzugsweise zu mindestens 70%, für die zu adsorbierenden Giften und Kampfstoffe frei zugünglich bzw, ist die Adsorpstionsschicht zu höchstens 50%, vorzugsweise zu höchstens 40% insbesondere zu höchstens 30%, von der Sperrschicht bedeckt.

Für die Ausbildung der Adsorptionsschicht können unterschiedliche Adsorbentien zum Einsatz kommen, wie sie in den Ansprüchen 16 bis 22 definiert sind. Bei der Verwendung von diskreten Aktivkohleteilchen, vorzugsweise in Kornform ("Kornkohle") oder Kugelform ("Kugelkohle"), für die Ausbildung der Adsorptionsschicht haben diese vorzugsweise mittlere Durchmesser der Aktivkohleteilchen von < 0,5 mm, vorzugsweise < 0,4 mm, bevorzugt < 0,35 mm, besonders bevorzugt < 0,3 mm, ganz besonders bevorzugt ≤ 0,25 mm, jedoch mindestens 0,1 mm; die kleineren Aktivkohleteilchen sind für Anwendungen bevorzugt, bei denen eine gute Adsorptionskinetik und ein geringes Gewicht des Adsorptionsmaterials gefordert ist, während die größeren Aktivkohleteilchen insbesondere dann zum Einsatz kommen, wenn eine größere Adsorptionskapazität gefordert ist. Durch eine Kombination kleinerer und größerer Aktivkohleteilchen für die Ausbildung der Adsorptionsschicht lassen sich sowohl eine gute Adsorptionskinetik als auch eine gute Adsorptionskapazität erreichen. Dasselbe gilt für eine Kombination von Aktivkohlekugeln und Aktivkohlefasern für die Ausbildung der Adsorptionsschicht.

Weitere Vorteile, Eigenschaften, Aspekte und Merkmale des erfindungsgemäßen Adsorptionsmaterials ergeben sich aus der folgenden Beschreibung eines in der Zeichnung dargestellten, bevorzugten Ausführungsbeispiels der vorliegenden Erfindung. Es zeigt:
- Fig. 1: eine schematische Darstellung eines Adsorptionsmaterials gemäß einem bevorzugten Ausführungsbeispiel der Erfindung, welches als Adsorptionsschicht diskrete Aktivkohlekügelchen enthält;
- Fig. 2: eine schematische Darstellung eines Adsorptionsmaterials gemäß einem bevorzugten Ausführungsbeispiel der Erfindung, welches als Adsorptionsschicht ein Aktivkohleflächengebilde enthält.

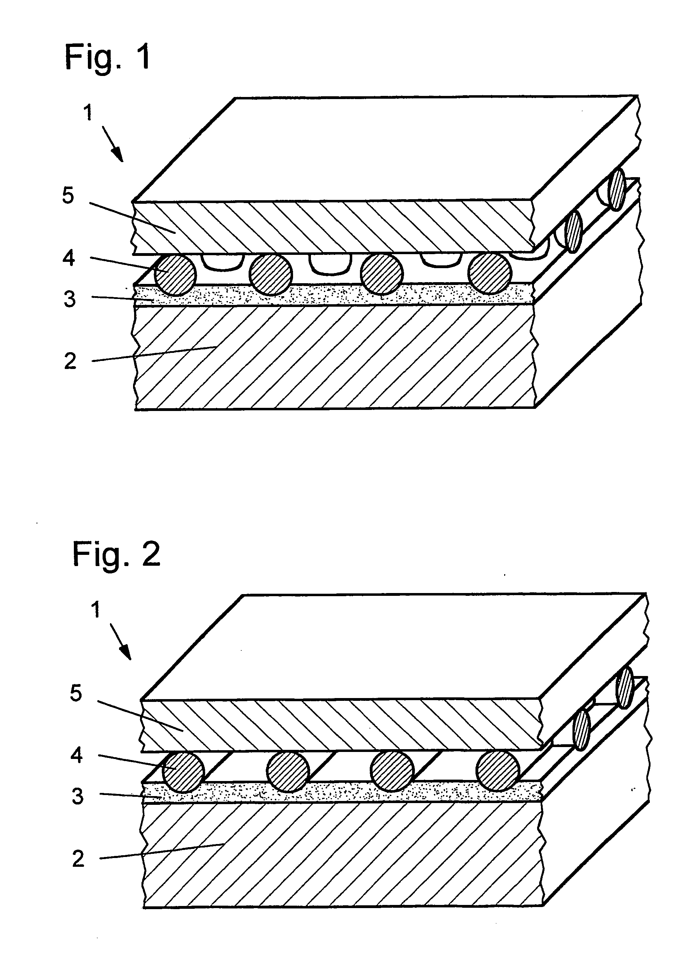

Fig. 1 und 2 zeigen ein Adsorptionsmaterial 1 gemäß einem bevorzugten Ausführungsbeispiel der Erfindung, welches sich insbesondere für die Herstellung von Schutzmaterialien aller Art (z. B. Schutzanzüge, Schutzhandschuhe, Schutzabdeckungen und dergleichen) eignet. Das Adsorptionsmaterial 1 weist ein insbesondere flächiges Trägermaterial 2, eine zumindest im wesentlichen luftundurchlässige, wasserdampfdurchlässige Sperrschicht 3 und eine Adsorptionsschicht 4 auf, wobei die Sperrschicht 3 auf dem Trägermaterial 2 aufgebracht ist und gleichzeitig als Haftschicht für die auf der dem Trägermaterial 2 abgewandten Seite der Sperrschicht 3 angeordnete Adsorptionsschicht 4 dient. Bei der Ausführungsform gemäß Fig. 1 wird die Adsorptionsschicht 4 durch diskrete Aktivkohlekügelchen ausgebildet, während bei der Ausführungsform gemäß Fig. 2 die Adsorptionsschicht durch ein Aktivkohleflächengebilde in Form eines Gewebes mit Kett- und Schußfäden ausgebildet ist. Die Sperrschicht 3 weist in beiden Fällen eine Wasserdampfdurchlässigkeit von mindestens 201 / m² pro 24 h bei einer Dicke von 50 µm auf (bezogen auf eine Temperatur von 25 °C und gemessen nach der "Methode des umgekehrten Bechers"). Bei beiden Ausführungsformen ist auf die Adsorptionsschicht 4 noch ein Abdeckmaterial 5 aufgebracht. Für weitere Einzelheiten kann auf obige Ausführungen sowie auf die Patentansprüche verwiesen werden.

## Patentansprüche

1. Adsorptionsmaterial (1), insbesondere für die Herstellung von Schutzmaterialien, aufweisend:
- ein flächiges Trägermaterial (2),
- eine luftundurchlässige, wasserdampfdurchlässige Sperrschicht (3) , welche gegenüber Flüssig keiten, Aerosolen, Chemischen Giften und Kampfstoffen undurchlässig ist oder zumindest deren Durchtritt vorzügert, und
- eine Adsorptionsschicht (4) auf Basis aktivkohlehaltiger Materialien
wobei die Sperrschicht (3) auf dem Trägermaterial (2) aufgebracht ist und gleichzeitig als Haftschicht für die auf der dem Trägermaterial (2) abgewandten Seite der Sperrschicht (3) angeordnete Adsorptionsschicht (4) dient,
wobei die Sperrschicht (3) als ein mehrschichtiger Verbund aus drei miteinander verbundenen Schichten ausgebildet ist, wobei der mehrschichtige Verbund eine Kernschicht und zwei mit der Kernschicht verbundene äußere Schichten umfaßt, wobei die Kernschicht als 1 bis 100 µm dicke Membran auf Basis eines Polymers auf Cellulosegrundlage ausgebildet ist und die zwei mit der Kernschicht verbundenen äußeren Schichten jeweils als 1 bis 100 µm dicke Membran auf Basis eines Polymers auf Polyurethan grundlage ausgebildet sind, und
wobei die Sperrschicht (3) als kontinuierliche, geschlossene Schicht auf dem Trägermaterial (2) aufgetragen ist.

2. Adsorptionsmaterial nach Anspruch 1, **dadurch gekennzeichnet, daß** die Kernschicht auf Basis eines Polymers auf Cellulosegrundlage als 5 bis 50 µm, vorzugsweise 10 bis 20 µm, dicke Membran ausgebildet ist.

3. Adsorptionsmaterial nach einem der vorangehenden Ansprüche, **dadurch gekennzeichnet**, **dadurch gekennzeichnet, daß** die zwei mit der Kernschicht verbundenen äußeren Schichten auf Basis eines Polymers auf Polyurethan grundlage jeweils als 5 bis 50 µm, vorzugsweise 5 bis 10 µm, dicke Membran ausgebildet sind.

4. Adsorptionsmaterial nach einem der vorangehenden Ansprüche, **dadurch gekennzeichnet, daß** die Sperrschicht (3) bei 25 °C eine Wasserdampfdurchlässigkeit von mindestens 20 1/m² pro 24 h bei einer Dicke von 50 µm aufweist.

5. Adsorptionsmaterial nach einem der vorangehenden Ansprüche, **dadurch gekennzeichnet, daß** das Adsorptionsmaterial (1) bei 25 °C eine Wasserdampfdurchlässigkeit von mindestens 10 1/m² pro 24 h, insbesondere mindestens 15 1/m² pro 24 h, vorzugsweise mindestens 20 1/m² pro 24 h, bei einer Dicke der Sperrschicht (3) von 50 µm aufweist.

6. Adsorptionsmaterial nach einem der vorangehenden Ansprüche, **dadurch gekennzeichnet, daß** das Trägermaterial (2) ein luftdurchlässiges Textilmaterial, insbesondere ein textiles Flächengebilde, ist.

7. Adsorptionsmaterial nach Anspruch 6, **dadurch gekennzeichnet, daß** das Textilmaterial ein Gewebe, Gewirke, Gestricke, Gelege, Textilverbundstoff oder Vlies.

8. Adsorptionsmaterial nach einem der vorangehenden Ansprüche, **dadurch gekennzeichnet, daß** das Trägermaterial (2) oleophobiert ist, insbesondere durch eine spezielle Imprägnierung.

9. Adsorptionsmaterial nach einem der vorangehenden Ansprüche, **dadurch gekennzeichnet, daß** das Trägermaterial (2) ein Flächengewicht von 50 bis 300 g/m², insbesondere 75 bis 250 g/m², vorzugsweise 90 bis 175 g/m², aufweist.

10. Adsorptionsmaterial nach einem der vorangehenden Ansprüche, **dadurch gekennzeichnet, daß** das Trägermaterial (2) ein luftdurchlässiges, 75 bis 250 g/m², vorzugsweise 90 bis 175 g/m² schweres textiles Flächengebilde ist, welches oleophob ausgerüstet sein kann.

11. Adsorptionsmaterial nach einem der vorangehenden Ansprüche, **dadurch gekennzeichnet, daß** die Dicke der Sperrschicht (3) 5 bis 250 µm, bevorzugt 10 bis 150 µm, besonders bevorzugt von 10 bis 100 µm, ganz besonders bevorzugt von 20 bis 50 µm, beträgt.

12. Adsorptionsmaterial nach einem der vorangehenden Ansprüche, **dadurch gekennzeichnet, daß** die Sperrschicht (3) in Mengen von 1 bis 250 g/m², insbesondere 10 bis 150 g/m², vorzugsweise 20 bis 100 g/m², bevorzugt 25 bis 60 g/m², aufgetragen ist, bezogen auf das Trockengewicht der Sperrschicht (3).

13. Adsorptionsmaterial nach einem der vorangehenden Ansprüche, **dadurch gekennzeichnet, daß** die Sperrschicht (3) allenfalls nur geringfügig quellfähig ist, wobei die Quellfähigkeit oder das Wasseraufnahmevermögen der Sperrschicht (3) höchstens 35 %, insbesondere höchstens 25 %, vorzugsweise höchstens 20 %, bezogen auf das Eigengewicht der Sperrschicht (3), beträgt.

14. Adsorptionsmaterial nach einem der vorangehenden Ansprüche, **dadurch gekennzeichnet, daß** die Sperrschicht (3) keine oder keine stark hydrophilen Gruppen, insbesondere keine Hydroxylgruppen, aufweist.

15. Adsorptionsmaterial nach einem der vorangehenden Ansprüche, **dadurch gekennzeichnet, daß** die Sperrschicht (3) schwach hydrophile Gruppen, insbesondere Polyethergruppen, aufweist.

16. Adsorptionsmaterial nach einem der vorangehenden Ansprüche, **dadurch gekennzeichnet, daß** die Adsorptionsschicht (4) aus diskreten Aktivkohleteilchen, vorzugsweise in Kornform oder Kugelform, besteht.

17. Adsorptionsmaterial nach Anspruch 16, **dadurch gekennzeichnet, daß** der mittlere Durchmesser der Aktivkohleteilchen < 0,5 mm, vorzugsweise < 0,4 mm, bevorzugt <0,35 mm, besonders bevorzugt < 0,3 mm, ganz besonders bevorzugt ≤ 0,25 mm, beträgt und der mittlere Durchmesser der Aktivkohleteilchen mindestens 0,1 mm beträgt.

18. Adsorptionsmaterial nach Anspruch 16 oder 17, **dadurch gekennzeichnet, daß** das Adsorptionsmaterial (1) die Aktivkohleteilchen in einer Menge von 5 bis 500 g/m², insbesondere 10 bis 400 g/m², vorzugsweise 20 bis 300 g/m², bevorzugt 25 bis 250 g/m², besonders bevorzugt 50 bis 150 g/m², ganz besonders bevorzugt 50 bis 100g/m², enthält.

19. Adsorptionsmaterial nach einem der Ansprüche 16 bis 18, **dadurch gekennzeichnet, daß** die Aktivkohleteilchen eine innere Oberfläche (BET) von mindestens 800 m²/g, insbesondere von mindestens 900 m²/g, vorzugsweise mindestens 1.000 m²/g, bevorzugt im Bereich von 800 bis 1.500 m²/g, aufweisen.

20. Adsorptionsmaterial nach einem der vorangehenden Ansprüche, **dadurch gekennzeichnet, daß** die Adsorptionsschicht (4) Aktivkohlefasern, insbesondere in Form eines Aktivkohleflächengebildes, umfaßt.

21. Adsorptionsmaterial nach Anspruch 20, **dadurch gekennzeichnet, daß** das Aktivkohleflächengebilde ein Flächengewicht von 20 bis 200 g/m², insbesondere 30 bis 150 g/m², vorzugsweise 50 bis 120 g/m², aufweist.

22. Adsorptionsmaterial nach Anspruch 20 oder 21, **dadurch gekennzeichnet, daß** das Aktivkohleflächengebilde ein Aktivkohlegewebe, -gewirke, -gelege oder -verbundstoff, insbesondere auf Basis von carbonisierter und aktivierter Cellulose oder eines carbonisierten und aktivierten Acrylnitrils, ist.

23. Adsorptionsmaterial nach einem der vorangehenden Ansprüche, **dadurch gekennzeichnet, daß** die Adsorptionsschicht (4) außerdem mit mindestens einem Katalysator imprägniert ist.

24. Adsorptionsmaterial nach Anspruch 23, **dadurch gekennzeichnet, daß** als Katalysator Enzyme und/oder Metallionen, vorzugsweise Kupfer-, Silber-, Cadmium-, Platin-, Palladium-, Zink- und/oder Quecksilberionen, verwendet sind.

25. Adsorptionsmaterial nach Anspruch 23 oder 24, **dadurch gekennzeichnet, daß** die Menge an Katalysator 0,05 bis 12 Gew.-%, vorzugsweise 1 bis 10 Gew.-%, besonders bevorzugt 2 bis 8 Gew.-%, bezogen auf das Gewicht der Adsorptionsschicht (4), beträgt.

26. Adsorptionsmaterial nach einem der vorangehenden Ansprüche, **dadurch gekennzeichnet, daß** das Adsorptionsmaterial (1) außerdem eine Abdeckschicht (5) aufweist, wobei die Abdeckschicht (5) auf der Adsorptionsschicht (4) aufgebracht ist.

27. Adsorptionsmaterial nach Anspruch 26, **dadurch gekennzeichnet, daß** die Abdeckschicht (5) an der Adsorptionsschicht befestigt ist, insbesondere mittels eines Klebstoffs, welcher vorzugsweise diskontinuierlich, bevorzugt punktförmig, auf der Abdeckschicht (5) aufgetragen ist, oder mittels eines Schmelzklebergewebes ("Schmelzkleberweb").

28. Adsorptionsmaterial nach Anspruch 26 oder 27, **gekennzeichnet**, daß die Abdeckschicht (5) ein luftdurchlässiges Textilmaterial, insbesondere ein textiles Flächengebilde, vorzugsweise ein Gewebe, Gewirke, Gestricke, Gelege oder Textilverbundstoff ist.

29. Adsorptionsmaterial nach einem der Ansprüche 26 bis 28, **dadurch gekennzeichnet, daß** das Abdeckmaterial (5) ein Flächengewicht von 5, bis 75 g/m², insbesondere 10 bis 50 g/m², vorzugsweise 15 bis 30 g/m², aufweist.

30. Adsorptionsmaterial nach einem der vorangehenden Ansprüche, **dadurch gekennzeichnet, daß** das Adsorptionsmaterial (1) einen Wasserdampfdurchgangswiderstand Rₑₜ unter stationären Bedingungen, gemessen nach DIN EN 31 092: 1993 (Februar 1994) und internationaler Norm ISO 11 092, bei 35 °C von höchstens 30 (m²· Pascal)/Watt, insbesondere höchstens 25 (m²· Pascal)/Watt, vorzugsweise höchstens 20 (m² · Pascal)/Watt, bei einer Dicke der Sperrschicht (3) von 50 µm aufweist.

31. Adsorptionsmaterial nach einem der vorangehenden Ansprüche, **dadurch gekennzeichnet, daß** die Sperrschicht (3) einen Wasserdampfdurchgangswiderstand Rₑₜ unter stationären Bedingungen, gemessen nach DIN EN 31 092:1993 (Februar 1994) und internationaler Norm ISO 11 092, bei 35 °C von höchstens 25 (m² Pascal)/Watt, insbesondere höchstens 20 (m² Pascal)/Watt, vorzugsweise höchstens 13 (m². Pascal)/Watt, bei einer Dicke von 50 µm aufweist.

32. Adsorptionsmaterial nach einem der vorangehenden Ansprüche, **dadurch gekennzeichnet, daß** das Adsorptionsmaterial (1) eine Barrierewirkung gegenüber chemischen Kampfstoffen, insbesondere Bis[2-chlorethyl]sulfid (Senfgas, Lost, Gelbkreuz), gemessen nach CRDEC-SP-84010, Methode 2.2, von höchstens 4 µg/cm² pro 24 h, insbesondere höchstens 3,5 µg/cm² pro 24 h, vorzugsweise höchstens 3,0 µg/cm² pro 24 h, besonders bevorzugt höchstens 2,5 µg/cm² pro 24 h, bei einer Dicke der Sperrschicht (3) von 50 µm aufweist.

33. Verfahren zur Herstellung eines Adsorptionsmaterials nach einem der Ansprüche 1 bis 32, **gekennzeichnet durch** die folgenden Verfahrensschritte:
(a) Bereitstellung eines Trägermaterials (2); dann
(b) Aufbringung einer Dispersion, enthaltend ein Isocyanat und einen isocyanatreaktiven Vernetzer, auf das Trägermaterial (2) **durch** Aufsprühen, Aufrakeln oder dergleichen; dann
(c) Vortrocknung der in Schritt (b) aufgetragenen Dispersionen, wobei die Vortrocknungstemperaturen unterhalb der Vernetzungstemperatur der Dispersion liegen, so daß eine kontinuierliche, geschlossene klebrige Schicht entsteht, die gleichzeitig als Haftschicht für die im sich anschließenden Schritt (d) aufzubringende Schicht auf Basis eines Polymers auf Cellulosegrundlage dient; dann
(d) Aufbringen einer Schicht auf Basis eines Polymers auf Cellulosegrundlage auf die in Schritt (c) erzeugte, noch klebrige Haftschicht; dann
(e) Aufbringung einer Dispersion, enthaltend ein Isocyanat und einen isocyanatreaktiven Vernetzer, auf die in Schritt (d) aufgebrachte Schicht auf Basis eines Polymers auf Cellulosegrundlage **durch** Aufsprühen, Aufrakeln oder dergleichen; dann
(f) gegebenenfalls Vortrocknung der in Schritt (e) aufgetragenen Dispersionen, wobei die Vortrocknungstemperaturen unterhalb der Vernetzungstemperatur der Dispersion liegen, so daß eine kontinuierliche, geschlossene klebrige Schicht entsteht, die gleichzeitig als Haftschicht für die im sich anschließenden Schritt (g) aufzubringende Adsorptionsschicht (4) dient; dann
(g) Aufbringen der Adsorptionsschicht (4) auf die in Schritt (e) aufgebrachte, aus der Dispersion bestehende Schicht oder aber auf die in Schritt (f) erzeugte, noch klebrige Haftschicht; dann
(h) Trocknen und Vernetzen der Dispersion oder der noch klebrigen Haftschicht unter Erwärmen oberhalb der Vernetzungstemperatur, so daß eine Sperrschicht (3) mit der darauf aufgebrachten Adsorptionsschicht (4) resultiert; dann
(i) gegebenenfalls Aufbringung eines Abdeckmaterials (5) auf die Adsorptionsschicht (4).

34. Verwendung eines Adsorptionsmaterials (1) nach einem der Ansprüche 1 bis 32 zur Herstellung von Schutzmaterialien aller Art, insbesondere Schutzanzügen, Schutzhandschuhen und Schutzabdeckungen, vorzugsweise für den ABC-Einsatz.

35. Verwendung nach Anspruch 34, **dadurch gekennzeichnet, daß** das Trägermaterial (2) der Schadstoffquelle zugewandt ist.

36. Schutzmaterialien, insbesondere Schutzanzüge, Schutzhandschuhe und Schutzabdeckungen, hergestellt unter Verwendung eines Adsorptionsmaterials (1) nach einem der Ansprüche 1 bis 22 oder aufweisend ein Adsorptionsmaterial (1) nach einem der Ansprüche 1 bis 32.

37. Schutzmaterialien nach Anspruch 36, **dadurch gekennzeichnet, daß** das Trägermaterial (2) der Schadstoffquelle zugewandt ist und daß es sich um Schutzanzüge handelt, wobei das Trägermaterial (2) beim Tragen der Schutzanzüge auf der vom Körper abgewandten Seite angeordnet ist.

## Claims

1. Adsorbing material (1), especially for the production of protective materials, comprising:
- a sheetlike carrier material (2),
- an air impervious, water vapour pervious barrier layer (3) which is essentially impervious to liquids, aerosols, chemical poisons and warfare agents or at least retards their passage, and
- an adsorbing layer (4) based on materials comprising activated carbon,
wherein the barrier layer (3) is atop the carrier material (2) and also serves as a bonding layer for the adsorbing layer (4) disposed on that side of the barrier layer (3) which is remote from the carrier material (2),
wherein the barrier layer (3) is formed as a multilayered composite of three interconnected layers, the multilayered composite comprising a core layer and two outer layers connected to the core layer, the core layer being formed on the basis of a cellulose-based polymer as a membrane 1 to 100 µm in thickness and the two outer layers connected to the core layer each being formed on the basis of a polyurethane-based polymer as a membrane 1 to 100 µm in thickness, and
wherein the barrier layer (3) forms a continuous, uninterrupted layer atop the carrier material (2).

2. Adsorbing material according to Claim 1, **characterized in that** the core layer is formed on the basis of a cellulose-based polymer as a membrane 5 to 50 µm and preferably 10 to 20 µm in thickness.

3. Adsorbing material according to either of the preceding claims, **characterized in that** the two outer layers connected to the core layer are each formed on the basis of a polyurethane-based polymer as a membrane 5 to 50 µm and preferably 5 to 10 µm in thickness.

4. Adsorbing material according to any one of the preceding claims, **characterized in that** the barrier layer (3) has a 25°C water vapour transmission rate of at least 20 l/m² per 24 h when 50 µm thick.

5. Adsorbing material according to any one of the preceding claims, **characterized in that** the adsorbing material (1) has a 25°C water vapour transmission rate of at least 10 1/m² per 24 h, especially at least 15 1/m² per 24 h and preferably at least 20 1/m² per 24 h when the barrier layer (3) is 50 µm thick.

6. Adsorbing material according to any one of the preceding claims, **characterized in that** the carrier material (2) is an air pervious textile material, especially a textile fabric.

7. Adsorbing material according to Claim 6, **characterized in that** the textile material is a woven, loop-formingly knitted, loop-drawingly knitted, nonwoven-scrim, bonded-fibre or batt fabric.

8. Adsorbing material according to any one of the preceding claims, **characterized in that** the carrier material (2) is oleophobicized, especially through a specific impregnation.

9. Adsorbing material according to any one of the preceding claims, **characterized in that** the carrier material (2) has a basis weight in the range from 50 to 300 g/m², especially in the range from 75 to 250 g/m² and preferably in the range from 90 to 175 g/m².

10. Adsorbing material according to any one of the preceding claims, **characterized in that** the carrier material (2) is an air pervious textile fabric which has a basis weight in the range from 75 to 250 g/m² and preferably in the range from 90 to 175 g/m² and may be finished to be oleophobic.

11. Adsorbing material according to any one of the preceding claims, **characterized in that** the thickness of the barrier layer (3) is in the range from 5 to 250 µm, preferably in the range from 10 to 150 µm, more preferably in the range from 10 to 100 µm and most preferably in the range from 20 to 50 µm.

12. Adsorbing material according to any one of the preceding claims, **characterized in that** the barrier layer (3) is applied in amounts from 1 to 250 g/m², especially 10 to 150 g/m², preferably 20 to 100 g/m² and more preferably 25 to 60 g/m², based on the dry weight of the barrier layer (3).

13. Adsorbing material according to any one of the preceding claims, **characterized in that** the barrier layer (3) is only minimally swellable if at all, the swellability or the water uptake capacity of the barrier layer (3) being not more than 35%, especially not more than 25% and preferably not more than 20%, based on the own weight of the barrier layer (3).

14. Adsorbing material according to any one of the preceding claims, **characterized in that** the barrier layer (3) has no or no strongly hydrophilic groups, especially no hydroxyl groups.

15. Adsorbing material according to any one of the preceding claims, **characterized in that** the barrier layer (3) has weakly hydrophilic groups, especially polyether groups.

16. Adsorbing material according to any one of the preceding claims, **characterized in that** the adsorbing layer (4) consists of discrete activated carbon particles, preferably in granular form or spherical form.

17. Adsorbing material according to Claim 16, **characterized in that** the measure of central tendency diameter of the activated carbon particles is < 0.5 mm, preferably < 0.4 mm, more preferably < 0.35 mm, even more preferably < 0.3 mm and most preferably ≤ 0.25 mm and the measure of central tendency diameter of the activated carbon particles is at least 0.1 mm.

18. Adsorbing material according to Claim 16 or 17, **characterized in that** the adsorbing material (1) includes the activated carbon particles in an amount from 5 to 500 g/m², especially 10 to 400 g/m², preferably 20 to 300 g/m², more preferably 25 to 250 g/m², even more preferably 50 to 150 g/m² and most preferably 50 to 100 g/m².

19. Adsorbing material according to any one of the Claims 16 to 18, **characterized in that** the activated carbon particles have an internal surface area (BET) of at least 800 m²/g, especially of at least 900 m²/g, preferably at least 1000 m²/g and more preferably in the range from 800 to 1500 m²/g.

20. Adsorbing material according to any one of the preceding claims, **characterized in that** the adsorbing layer (4) comprises activated carbon fibres, in particular in the form of an activated carbon fabric.

21. Adsorbing material according to Claim 20, **characterized in that** the activated carbon fabric has a basis weight in the range from 20 to 200 g/m², especially in the range from 30 to 150 g/m² and preferably in the range from 50 to 120 g/m².

22. Adsorbing material according to Claim 20 or 21, **characterized in that** the activated carbon fabric is a woven, loop-formingly knitted, nonwoven-scrim or bonded-fibre activated carbon fabric, especially on the basis of carbonized and activated cellulose or of a carbonized and activated acrylonitrile.

23. Adsorbing material according to any one of the preceding claims, **characterized in that** the adsorbing layer (4) is additionally impregnated with at least one catalyst.

24. Adsorbing material according to Claim 23, **characterized in that** enzymes and/or metal ions, preferably ions of copper, of silver, of cadmium, of platinum, of palladium, of zinc and/or of mercury, are used as a catalyst.

25. Adsorbing material according to Claim 23 or 24, **characterized in that** the amount of catalyst is in the range from 0.05% to 12% by weight, preferably in the range from 1% to 10% by weight and more preferably in the range from 2% to 8% by weight, based on the weight of the adsorbing layer (4).

26. Adsorbing material according to any one of the preceding claims, **characterized in that** the adsorbing material (1) additionally comprises a covering layer (5), the covering layer (5) being atop the adsorbing layer (4).

27. Adsorbing material according to Claim 26, **characterized in that** the covering layer (5) is secured to the adsorbing layer, especially by means of an adhesive which is preferably applied discontinuously and more preferably spotwise atop the covering layer (5), or by means of a hotmelt web.

28. Adsorbing material according to Claim 26 or 27, **characterized in that** the covering layer (5) is an air pervious textile material, especially a textile fabric, preferably a woven, loop-formingly knitted, loop-drawingly knitted, nonwoven-scrim or bonded-fibre fabric.

29. Adsorbing material according to any one of the Claims 26 to 28, **characterized in that** the covering material (5) has a basis weight in the range from 5 to 75 g/m², especially in the range from 10 to 50 g/m² and preferably in the range from 15 to 30 g/m².

30. Adsorbing material according to any one of the preceding claims, **characterized in that** the adsorbing material (1) has a steady state water vapour transmission resistance Rₑₜ, measured according to DIN EN 31 092: 1993 (February 1994) and ISO 11 092, at 35°C of not more than 30 m²·pascal/watt, in particular not more than 25 m²·pascal/watt, preferably not more than 20 m²· pascal/watt, when the barrier layer (3) is 50 µm in thickness.

31. Adsorbing material according to any one of the preceding claims, **characterized in that** the barrier layer (3) has a steady state water vapour transmission resistance Rₑₜ, measured according to DIN EN 31 092: 1993 (February 1994) and ISO 11 092, at 35°C of not more than 25 m²·pascal/watt, in particular not more than 20 m²·pascal/watt, preferably not more than 13 m²·pascal/watt, when 50 µm in thickness.

32. Adsorbing material according to any one of the preceding claims, **characterized in that** the adsorbing material (1) offers permeation resistance to chemical warfare agents, especially bis[2-chloroethyl] sulphide (mustard gas, Hd, Yellow Cross), measured according to CRDEC-SP-84010, method 2.2, allowing not more than 4 µg/cm² per 24 h, especially not more than 3.5 µg/cm² per 24 h, preferably not more than 3.0 µg/cm² per 24 h and more preferably not more than 2.5 µg/cm² per 24 h when the barrier layer (3) is 50 µm in thickness.

33. Process for producing an adsorbing material according to any one of the Claims 1 to 32, **characterized by** the following steps:
(a) providing a carrier material (2); then
(b) applying a dispersion comprising an isocyanate and an isocyanate-reactive crosslinker by spraying, doctor coating or the like atop the carrier material (2), then;
(c) predrying the dispersions applied in step (b), the predrying temperatures being below the crosslinking temperature of the dispersion, to form a continuous, uninterrupted tacky layer which also serves as a bonding layer for the layer to be applied in the subsequent step (d) on the basis of a cellulose-based polymer; then
(d) applying a layer on the basis of a cellulose-based polymer atop the still tacky bonding layer generated in step (c); then
(e) applying a dispersion comprising an isocyanate and an isocyanate-reactive crosslinker by spraying, doctor coating or the like atop the layer, applied in step (d), on the basis of a cellulose-based polymer; then
(f) optionally predrying the dispersions applied in step (e), the predrying temperatures being below the crosslinking temperature of the dispersion, to form a continuous, uninterrupted tacky layer which also serves as a bonding layer for the adsorbing layer (4) to be applied in the subsequent step (g); then
(g) applying the adsorbing layer (4) atop the layer applied in step (e) and consisting of the dispersion or alternatively atop the still tacky bonding layer generated in step (f); then
(h) drying and crosslinking the dispersion or the still tacky bonding layer by heating above the crosslinking temperature, so that a barrier layer (3) supporting the adsorbing layer (4) applied thereto results; then
(i) optionally applying a covering material (5) atop the adsorbing layer (4).

34. Use of an adsorbing material (1) according to any one of the Claims 1 to 32 for producing protective materials of any kind, especially protective suits, protective gloves and protective covers, preferably for NBC deployment.

35. Use according to Claim 34, **characterized in that** the carrier material (2) faces the source of harmful material.

36. Protective materials, especially protective suits, protective gloves and protective covers, produced using an adsorbing material (1) according to any one of the Claims 1 to 32 or comprising an adsorbing material (1) according to any one of the Claims 1 to 32.

37. Protective materials according to Claim 36, **characterized in that** the carrier material (2) faces the source of harmful material and **in that** they are protective suits wherein, when worn, the carrier material (2) is disposed on the body-remote side.

## Revendications

1. Matériau adsorbant (1), en particulier pour la fabrication de matériaux de protection, présentant :
- un matériau de support en nappe (2),
- une couche barrière (3) imperméable à l'air, perméable à la vapeur d'eau, qui est imperméable aux liquides, aérosols, substances chimiques toxiques et agents bactériologiques ou retarde au moins leur pénétration, et
- une couche d'adsorption (4) à base de matériaux contenant du charbon actif,
la couche barrière (3) étant appliquée sur le matériau de support (2) et servant en même temps de couche adhésive pour la couche d'adsorption (4) disposée sur le côté de la couche barrière (3) opposé au matériau de support (2),
la couche barrière (3) étant conformée comme un composite multicouche composé de trois couches reliées entre elles, le composite multicouche comprenant une couche noyau et deux couches extérieures reliées à la couche noyau, la couche noyau étant conformée comme une membrane de 1 à 100 µm d'épaisseur à base d'un polymère à base de cellulose et les deux couches extérieures reliées à la couche noyau étant respectivement conformées comme une membrane de 1 à 100 µm d'épaisseur à base d'un polymère à base de polyuréthane, et la couche barrière (3) étant appliquée sur le matériau de support (2) comme une couche continue fermée.

2. Matériau adsorbant selon la revendication 1, **caractérisé en ce que** la couche noyau à base d'un polymère à base de cellulose est conformée comme une membrane de 5 à 50 µm, de préférence de 10 à 20 µm d'épaisseur.

3. Matériau adsorbant selon l'une des revendications précédentes, **caractérisé en ce que** les deux couches extérieures à base d'un polymère à base de polyuréthane, reliées à la couche noyau, sont chacune conformées comme une membrane de 5 à 50 µm, de préférence de 5 à 10 µm d'épaisseur.

4. Matériau adsorbant selon l'une des revendications précédentes, **caractérisé en ce que** la couche barrière (3) présente à 25 °C une perméabilité à la vapeur d'eau d'au moins 20 l/m² par 24 pour une épaisseur de 50 µm.

5. Matériau adsorbant selon l'une des revendications précédentes, **caractérisé en ce que** le matériau adsorbant (1) présente à 25 °C une perméabilité à la vapeur d'eau d'au moins 10 l/m² par 24 h, en particulier d'au moins 15 l/m² par 24 h, de préférence d'au moins 20 l/m² par 24 h, pour une épaisseur de la couche barrière (3) de 50 µm.

6. Matériau adsorbant selon l'une des revendications précédentes, **caractérisé en ce que** le matériau de support (2) est un matériau textile perméable à l'air, en particulier une structure textile en nappe.

7. Matériau adsorbant selon la revendication 6, **caractérisé en ce que** le matériau textile est un tissu, un tulle, un tricot, un non-tissé, un composite textile ou un voile.

8. Matériau adsorbant selon l'une des revendications précédentes, **caractérisé en ce que** le matériau de support (2) est rendu oléophobe, en particulier par une imprégnation spéciale.

9. Matériau adsorbant selon l'une des revendications précédentes, **caractérisé en ce que** le matériau de support (2) présente un poids par unité de surface de 50 à 300 g/m², en particulier de 75 à 250 g/m², de préférence de 90 à 175 g/m².

10. Matériau adsorbant selon l'une des revendications précédentes, **caractérisé en ce que** le matériau de support (2) est une structure textile en nappe, perméable à l'air, d'un poids de 75 à 250 g/m², de préférence de 90 à 175 g/m², qui peut être rendue oléophobe.

11. Matériau adsorbant selon l'une des revendications précédentes, **caractérisé en ce que** l'épaisseur de la couche barrière (3) est de 5 à 250 µm, de préférence de 10 à 150 µm, plus préférablement de 10 à 100 µm, le plus préférablement de 20 à 50 µm.

12. Matériau adsorbant selon l'une des revendications précédentes, **caractérisé en ce que** la couche barrière (3) est appliquée dans des quantités de 1 à 250 g/m², en particulier de 10 à 150 g/m², de préférence de 20 à 100 g/m², préférablement de 25 à 60 g/m², sur la base du poids à sec de la couche barrière (3).

13. Matériau adsorbant selon l'une des revendications précédentes, **caractérisé en ce que** la couche barrière (3) n'est toutefois que faiblement capable de gonfler, la capacité de gonflement ou la capacité d'absorption d'eau de la couche barrière (3) étant au maximum de 35 %, en particulier au maximum de 25 %, de préférence au maximum de 20 %, sur la base du poids propre de la couche barrière (3).

14. Matériau adsorbant selon l'une des revendications précédentes, **caractérisé en ce que** la couche barrière (3) ne présente aucun groupe hydrophile ou aucun groupe fortement hydrophile, en particulier aucun groupe hydroxyle.

15. Matériau adsorbant selon l'une des revendications précédentes, **caractérisé en ce que** la couche barrière (3) présente des groupes faiblement hydrophiles, en particulier des groupes polyéther.

16. Matériau adsorbant selon l'une des revendications précédentes, **caractérisé en ce que** la couche d'adsorption (4) est constituée de particules discrètes de charbon actif, de préférence en forme de grains ou de sphères.

17. Matériau adsorbant selon la revendication 16, **caractérisé en ce que** le diamètre moyen des particules de charbon actif est < 0,5 mm, de préférence < 0,4 mm, préférablement < 0,35 mm, plus préférablement < 0,3 mm, le plus préférablement s ,25 mm, et le diamètre moyen des particules de charbon actif est au moins de 0,1 mm.

18. Matériau adsorbant selon la revendication 16 ou 17, **caractérisé en ce que** le matériau adsorbant (1) contient les particules de charbon actif dans une quantité de 5 à 500 g/m², en particulier de 10 à 400 g/m², de préférence de 20 à 300 g/m², préférablement de 25 à 250 g/m², plus préférablement de 50 à 150 g/m², le plus préférablement de 50 à 100 g/m².

19. Matériau adsorbant selon l'une des revendications 16 à 18, **caractérisé en ce que** les particules de charbon actif présentent une superficie intérieure (BET) d'au moins 800 m²/g, en particulier d'au moins 900 m²/g, de préférence d'au moins 1000 m²/g, préférablement de l'ordre de 800 à 1500 m²/g.

20. Matériau adsorbant selon l'une des revendications précédentes, **caractérisé en ce que** la couche d'adsorption (4) comprend des fibres de charbon actif, en particulier sous la forme d'une structure en nappe de charbon actif.

21. Matériau adsorbant selon la revendication 20, **caractérisé en ce que** la structure en nappe de charbon actif présente un poids par unité de surface de 20 à 200 g/m², en particulier de 30 à 150 g/m², de préférence de 50 à 120 g/m².

22. Matériau adsorbant selon la revendication 20 ou 21, **caractérisé en ce que** la structure en nappe de charbon actif est un tissu, un tulle, un non-tissé ou un composite de charbon actif, en particulier à base de cellulose carbonisée et activée ou d'acrylnitrile carbonisé et activé.

23. Matériau adsorbant selon l'une des revendications précédentes, **caractérisé en ce que** la couche d'adsorption (4) est en outre imprégnée d'au moins un catalyseur.

24. Matériau adsorbant selon la revendication 23, **caractérisé en ce que** des enzymes et/ou des ions métalliques, de préférence des ions de cuivre, d'argent, de cadmium, de platine, de palladium, de zinc et/ou de mercure sont utilisés comme catalyseur.

25. Matériau adsorbant selon la revendication 23 ou 24, **caractérisé en ce que** la quantité de catalyseur représente de 0,05 à 12 % en poids, de préférence de 1 à 10 % en poids, plus préférablement de 2 à 8 % en poids par rapport au poids de la couche d'adsorption (4).

26. Matériau adsorbant selon l'une des revendications précédentes, **caractérisé en ce que** le matériau adsorbant (1) présente en outre une couche de recouvrement (5), la couche de recouvrement (5) étant appliquée sur la couche d'adsorption (4).

27. Matériau adsorbant selon la revendication 26, **caractérisé en ce que** la couche de recouvrement (5) est fixée à la couche d'adsorption, en particulier au moyen d'un adhésif qui est appliqué de préférence de manière discontinue, préférablement sous forme de points, sur la couche de recouvrement (5) ou au moyen d'un tissu de colle fusible (« voile de colle fusible »).

28. Matériau adsorbant selon la revendication 26 ou 27, **caractérisé en ce que** la couche de recouvrement (5) est un matériau textile perméable à l'air, en particulier une structure textile en nappe, de préférence un tissu, un tulle, un tricot, un non-tissé ou un composite textile.

29. Matériau adsorbant selon l'une des revendications 26 à 28, **caractérisé en ce que** le matériau de recouvrement (5) présente un poids par unité de surface de 5 à 75 g/m², en particulier de 10 à 50 g/m², de préférence de 15 à 30 g/m².

30. Matériau adsorbant selon l'une des revendications précédentes, **caractérisé en ce que** le matériau adsorbant (1) présente une résistance au passage de vapeur d'eau Rₑₜ dans des conditions stationnaires, mesurée selon DIN EN 31 092, 1993 (février 1994) et la norme internationale ISO 11 092, à 35 °C, d'au maximum 30 (m² · Pascal)/Watt, en particulier d'au maximum 25 (m² · Pascal)/Watt, de préférence d'au maximum 20 (m² · Pascal)/Watt, pour une épaisseur de la couche barrière (3) de 50 µm.

31. Matériau adsorbant selon l'une des revendications précédentes, **caractérisé en ce que** la couche barrière (3) présente une résistance au passage de vapeur d'eau Rₑₜ dans des conditions stationnaires, mesurée selon DIN EN 31 092, 1993 (février 1994) et la norme internationale ISO 11 092, à 35 °C, d'au maximum 25 (m² · Pascal)/Watt, en particulier d'au maximum 20 (m² · Pascal)/Watt, de préférence d'au maximum 13 (m² · Pascal)/Watt, pour une épaisseur de 50 µm.

32. Matériau adsorbant selon l'une des revendications précédentes, **caractérisé en ce que** le matériau adsorbant (1) présente un effet barrière contre les agents bactériologiques, en particulier le sulfure de bis[2-chloroéthyle] (gaz moutarde, ypérite), mesuré selon CRDEC-SP-84010, méthode 2.2, d'au maximum 4 µg/cm² par 24 h, en particulier d'au maximum 3,5 µg/cm² par 24 h, de préférence d'au maximum 3,0 µg/cm² par 24 h, plus préférablement d'au maximum 2,5 µg/cm² par 24 h, pour une épaisseur de la couche barrière (3) de 50 µm.

33. Procédé de fabrication d'un matériau adsorbant selon l'une des revendications 1 à 32, **caractérisé par** les étapes de procédé suivantes :
(a) préparation d'un matériau de support (2), puis
(b) application d'une dispersion contenant un isocyanate et un réticulant réagissant à l'isocyanate sur le matériau de support (2) par pulvérisation, raclage ou similaire, puis
(c) préséchage des dispersions appliquées à l'étape (b), les températures de préséchage étant inférieures à la température de réticulation de la dispersion de sorte qu'il se forme une couche collante continue fermée qui sert en même temps de couche adhésive pour la couche à base d'un polymère à base de cellulose à appliquer à l'étape suivante (d), puis
(d) application d'une couche à base d'un polymère à base de cellulose sur la couche adhésive encore collante, produite à l'étape (c), puis
(e) application d'une dispersion contenant un isocyanate et un réticulant réagissant à l'isocyanate sur la couche à base d'un polymère à base de cellulose appliquée à l'étape (d) par pulvérisation, raclage ou similaire, puis
(f) le cas échéant, préséchage des dispersions appliquées à l'étape (e), les températures de préséchage étant inférieures à la température de réticulation de la dispersion de sorte qu'il se forme une couche collante continue fermée qui sert en même temps de couche adhésive pour la couche d'adsorption (4) à appliquer à l'étape suivante (g), puis
(g) application de la couche d'adsorption (4) sur la couche constituée de la dispersion, appliquée à l'étape (e) ou encore sur la couche adhésive encore collante, produite à l'étape (f), puis
(h) séchage et réticulation de la dispersion ou de la couche adhésive encore collante en chauffant à une température supérieure à la température de réticulation de sorte qu'il en résulte une couche barrière (3) avec la couche d'adsorption (4) appliquée sur celle-ci, puis
(i) le cas échéant, application d'un matériau de recouvrement (5) sur la couche d'adsorption (4).

34. Utilisation d'un matériau adsorbant (1) selon l'une des revendications 1 à 32 pour la fabrication de matériaux de protection de tous types, en particulier de combinaisons de protection, de gants de protection et de couvertures de protection, de préférence pour l'utilisation en protection ABC.

35. Utilisation selon la revendication 34, **caractérisée en ce que** le matériau de support (2) est orienté vers la source de substances nocives.

36. Matériaux de protection, en particulier, combinaisons de protection, gants de protection et couvertures de protection, fabriqués en utilisant un matériau adsorbant (1) selon l'une des revendications 1 à 32 ou présentant un matériau adsorbant (1) selon l'un des revendications 1 à 32.

37. Matériaux de protection selon la revendication 36, **caractérisés en ce que** le matériau de support (2) est orienté vers la source de substances nocives et **en ce qu'**il s'agit de combinaisons de protection, le matériau de support (2) étant disposé, lorsqu'on porte les combinaisons de protection, sur le côté opposé au corps.
